# EUROPEAN PATENT APPLICATION

(11) **EP 4 717 402 A1**
(43) Date of publication of application: **01.04.2026**
(21) Application number: 24854136.9
(22) Date of filing: 05.08.2024
(51) Int. Cl.: B23Q 3/00, B23Q 3/06, B25B 5/04

(54) **CLAMP DEVICE**

(30) Priority: 16.08.2023 JP 2023132691; 10.11.2023 JP 2023192294
(71) Applicant: Kosmek Ltd., Kobe-shi, Hyogo 651-2241 (JP)
(72) Inventor: HARUNA, Yosuke, Kobe-shi, Hyogo 651-2241 (JP)
(74) Representative: Dolleymores
(86) International application number: PCT/JP2024/027892
(87) International publication number: WO 2025/037546

(57) **Abstract**

A clamp device includes an operating rod (20). A protrusion (26) is provided on the outer peripheral surface of the operating rod (20). A cam groove (25) in which the protrusion (26) is accommodated is formed in the inner surface of a housing (1) of the clamp device, the cam groove (25) fixes the operating rod (20) at a position where the operating rod (20) is moved to the leading end side when the operating rod (20) is pressed into the housing (1), and the cam groove (25) allows movement of the operating rod (20) toward the base end side when the operating rod (20) is pressed into the housing (1) again.

## Description

### [Technical Field]

The present invention relates to a clamp device.

### [Background Art]

Patent Literature 1 described below recites such a clamp device. The clamp device of the known art is structured as described below.

The clamp device of Patent Literature 1 (rotary clamp) is constituted by members such as a clamp rod which is movable in an axial direction and rotatable about an axial center, a ball which is inserted into a guide groove formed in an outer circumferential portion of the clamp rod so as to be used for rotating the rod, and a piston which is arranged to be able to advance and retract. A housing of the rotary clamp is provided with a clamping chamber and an unclamping chamber to which and from which pressure fluid is supplied and discharged. The rotary clamp is driven, i.e., the piston and the clamping rod are driven by using, for example, compressed air, and the compressed air is supplied to and discharged from the clamping chamber and the unclamping chamber each time the rotary clamp is driven.

As a clamp device configured to supply and discharge compressed air to and from a clamping chamber and an unclamping chamber each time the clamp device is driven, Patent Literature 2 recites a clamp device.

### [Citation List]

### [Patent Literatures]

[Patent Literature 1] Japanese Laid-Open Patent Publication No. 2018-43324
[Patent Literature 2] International Publication No. 2021/177385

### [Summary of Invention]

### [Technical Problem]

When a large number of clamp devices each of which is the above-described clamp device are provided, a large facility is required as a supplier of compressed air. Furthermore, piping installations by which compressed air is supplied and discharged are large in number and complicated in structure. These are not preferable in terms of energy saving and environmental measures. Therefore, preferably, compressed air is not used as a driving source.

Under these circumstances, the applicant of the subject application developed a clamp device that does not require pressure fluid such as compressed air for the drive, and filed patent applications (Japanese Patent Application No. 2023-021835 and Japanese Patent Application No. 2022-152081) directed to the developed clamp device.

The rotary clamp of the above-described Japanese Patent Application No. 2023-021835 and the clamp device of the above-described Japanese Patent Application No. 2022-152081, however, involve the following problem. In the rotary clamp and the clamp device, an external force must be kept applied to an operational member (e.g., a ball) or a clamp rod in order to maintain an unclamping state.

An object of the present invention is to provide a clamp device that can maintain the unclamping state without requiring continuous application of the external force.

### [Solution to Problem]

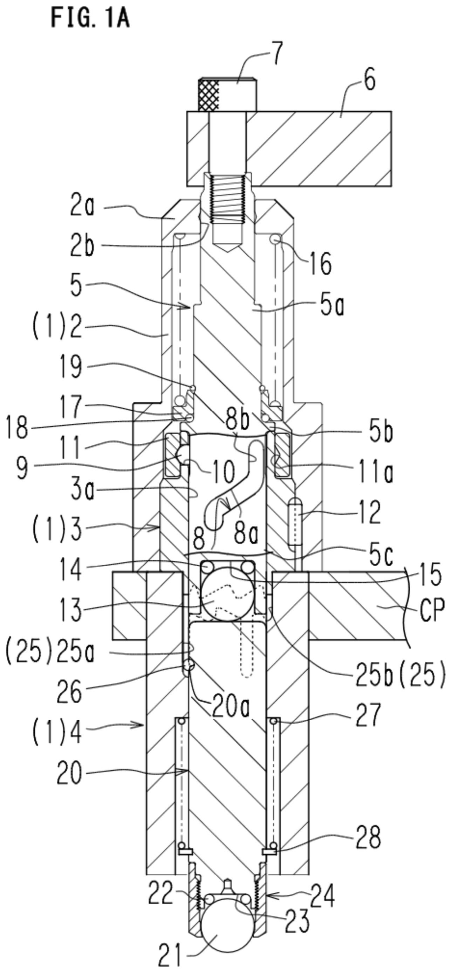

To achieve the object above, a clamp device disclosed in the subject application is arranged as described below, as shown in FIG. 1A to FIG. 12, for example.

(1) The clamp device includes: a housing 1; a clamp rod 5 which is provided in the housing 1 to be movable in an axial direction; an operating rod 20 which is provided in the housing 1 to be in series with the clamp rod 5, which is rotatable about an axial center, and is configured to press and move the clamp rod 5 toward the leading end side in the axial direction; a biasing member 16 which is provided in a leading-end-side part of the housing 1 and is configured to press and move the clamp rod 5 toward the base end side in the axial direction; and at least one protrusion 26 which is provided on the outer circumferential surface of the operating rod 20. A cam groove 25 in which the at least one protrusion 26 is accommodated is formed in an inner surface of the housing 1, the cam groove 25 fixes the operating rod 20 at a position where the operating rod 20 is moved to the leading end side when the operating rod 20 is pressed into the housing 1, and the cam groove 25 allows movement of the operating rod 20 toward the base end side when the operating rod 20 is pressed into the housing 1 again.

In the clamp device disclosed in the subject application, the following functions and effects are provided. The clamp device is equipped with the protrusion provided on the outer circumferential surface of the operating rod and the cam groove in which the protrusion is provided. When the operating rod is pressed into the housing, the operating rod is fixed at a position where the operating rod has been moved toward the leading end side, by the protrusion and the cam groove. Because the clamp rod is provided to be in series with the operating rod, the clamp rod is fixed at a position where the clamp rod has been moved to the leading end side, too. As a result, in the clamp device, it is possible to maintain an unclamping state without continuously applying an external force to the operating rod. The unclamping state refers to a state in which the clamp rod has been moved to the leading end side.

(2) The clamp device described in (1) may be arranged such that the cam groove 25 includes: at least one straight groove 25a which extends in the axial direction; and a rotary groove 25b which is a zigzag-shaped rotary groove 25b that extends from a leading end portion of the at least one straight groove 25a in a circumferential direction of the operating rod 20 in order to rotate the operating rod 20.

In this arrangement, the cam groove can be easily formed.

(3) The clamp device described in (2) may be arranged such that the rotary groove 25b includes: a leading-end-side sloped portion 25b3 which is inclined relative to the circumferential direction of the operating rod 20 and functions as a rotary guide for the at least one protrusion 26; and a base-end-side recess 25b2 which is formed on the base end side of the leading-end-side sloped portion 25b3 and fixes the operating rod 20 as the at least one protrusion 26 is fitted in the base-end-side recess 25b2.

In this arrangement, the cam groove can be easily formed.

(4) The clamp device described in (3) may be arranged such that the rotary groove 25b includes: a leading-end-side recess 25b1 which is formed continuously with the leading-end-side sloped portion 25b3 and allows the at least one protrusion 26 to be fitted in the leading-end-side recess 25b1; and a base-end-side sloped portion 25b4 which is formed between the at least one straight groove 25a and the base-end-side recess 25b2 in the circumferential direction of the operating rod 20 and functions as a rotary guide for the at least one protrusion 26.

In this arrangement, the cam groove can be easily formed.

(5) The clamp device described in any one of (2) to (4) may be arranged such that plural straight grooves 25a are provided at equal intervals in the circumferential direction of the operating rod 20.

According to this configuration, the turning angle of the operating rod each time the operating rod is pressed into the housing is reduced. Furthermore, the formation of the zigzag rotary groove which is part of the cam groove is easy.

(6) The clamp device described in (5) may be arranged such that plural protrusions (26) that are equal in number to the straight grooves (25a) are provided at equal intervals in the circumferential direction of the operating rod (20).

According to this configuration, it is possible to distribute the force received by the protrusions, allowing for smooth movement of the operating rod including rotation.

(7) The clamp device described in any one of (1) to (6) may be arranged such that the at least one protrusion 26 is a rotatable spherical body 26, and the spherical body 26 is provided in a hole 20a, 47a formed in the outer circumferential surface of the operating rod 20.

According to this configuration, it is possible to reduce the friction between the protrusion and the cam groove, allowing for smooth movement of the operating rod including rotation.

(8) The clamp device described in any one of (1) to (7) may further include an operational member 21 which is provided at a base-end-side end portion of the operating rod 20 in order to press and move the operating rod 20 toward the leading end side, and the operational member 21 may be a rotatable spherical body 21.

According to this configuration, the operating rod can be pushed and moved by the operational member provided separately from the operating rod. According to this arrangement, it is possible to reduce the friction between the operating rod and the operational member, allowing for smooth movement of the operating rod including rotation.

(9) The clamp device described in (8) may be arranged such that a bearing member 22 for the operational member is provided between a base-end-side end face of the operating rod 20 and the operational member 21.

According to this configuration, it is possible to rotate the operating rod more smoothly.

(10) The clamp device described in any one of (1) to (9) may be arranged such that a rotatable power transmission member 13 is provided between the clamp rod 5 and the operating rod 20.

This arrangement makes it possible to reduce the friction between the clamp rod and the operating rod, allowing the operating rod to be smoothly rotated.

(11) The clamp device described in (10) may be arranged such that the power transmission member 13 is a spherical body 13, and between a base-end-side end face of the clamp rod 5 and the power transmission member 13, a bearing member 14 for the power transmission member is provided.

According to this configuration, it is possible to rotate the operating rod more smoothly.

(12) the clamp device of any one of (1) to (11) may be arranged such that, for example, as shown in FIG. 1A to FIG. 5B, the clamp rod 5 is rotatable about an axial center.

According to this configuration, a rotary clamp device in which a clamp rod rotates can be employed as the clamp device.

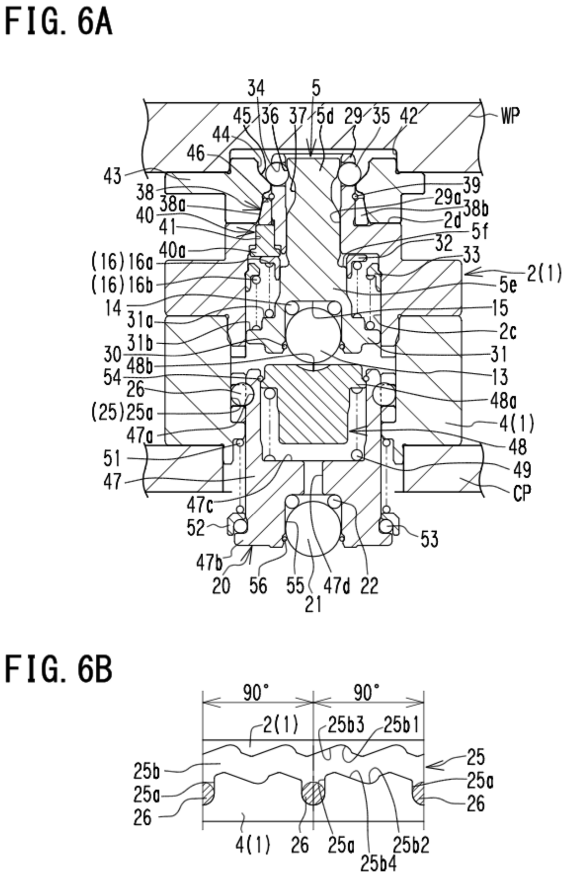

(13) The clamp device described in any one of (1) to (12) may be arranged such that, for example, as shown in FIG. 6A to FIG. 12, the operating rod 20 includes: an operating rod main body 47 that is rotatable about an axial center and has the at least one protrusion 26 on the outer circumferential surface; a movable member 48 that is provided in a bottomed cylindrical hole 47c formed in a part on the leading end side of the operating rod main body 47, the movable member 48 being configured to press and move the clamp rod 5 toward the leading end side; and a second biasing member 49 which is stretchable, is provided in the cylindrical hole 47c, and is configured to bias the movable member 48 toward the leading end side relative to the operating rod main body 47.

According to this configuration, because the operating rod is composed of the operating rod main body, the movable member, and the second biasing member, it is possible to smoothly rotate the operating rod even with the clamp rod whose moving distance in the axial direction is short.

(14) The clamp device described in (13) may be arranged such that both the biasing member 16 and the second biasing member 49 are springs, and the spring constant of the second biasing member 49 is greater than the spring constant of the biasing member 16.

This configuration allows the clamp rod to be reliably moved toward the leading end side. Furthermore, the clamp rod having been moved toward the leading end side is reliably maintained at this position.

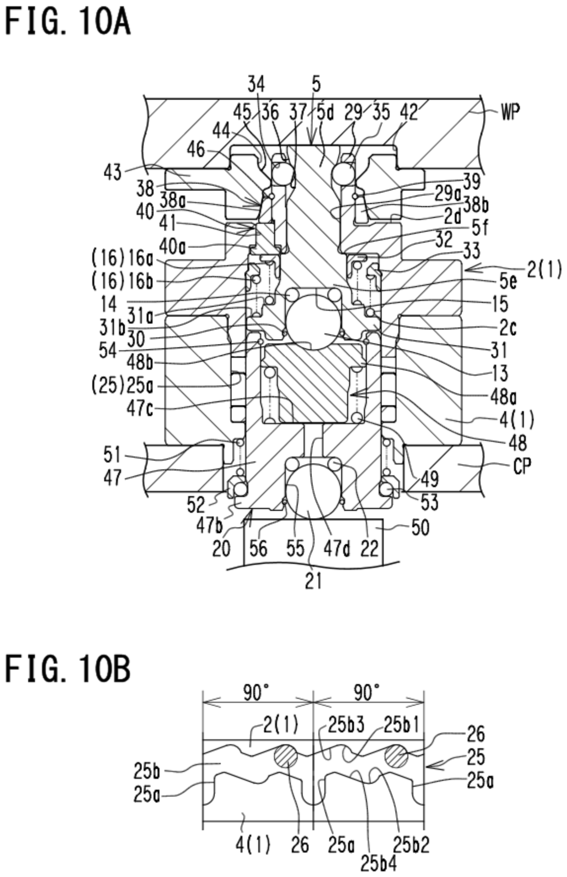

(15) The clamp device described in any one of (1) to (14) may be arranged such that, for example, as shown in FIG. 6A to FIG. 10B, a cylindrical plug member 29 into which the clamp rod 5 is inserted is provided at a leading end portion of the housing 1. The clamp device may include an engaging member 35 which is inserted into a through hole 34 formed in a circumferential wall of the plug member 29, the engaging member 35 being movable in the through hole 34 due to movement of the clamp rod 5 in the axial direction and being able to make contact with an engaging portion 45 of a fitting hole 44 formed in a clamping object WP so that the plug member 29 becomes insertable.

According to this configuration, the clamp device may be of a type that clamps a clamping object by a fitting hole part of the clamping object.

### [Advantageous Effects of Invention]

The present invention makes it possible to provide a clamp device that can maintain the unclamping state without requiring continuous application of the external force.

### [Brief Description of Drawings]

FIG. 1A shows First Embodiment of a clamp device, and is a side cross sectional view when no external force is applied to an operational member and a clamp rod is positioned at a lowest position.
FIG. 1B is an unfolded diagram of a cam groove part when the clamp device is in the state shown in FIG. 1A.
FIG. 2A is a side cross sectional view of the clamp device when the operational member is pressed into a housing in the clamp device shown in FIG. 1A.
FIG. 2B is an unfolded diagram of the cam groove part when the clamp device is in the state shown in FIG. 2A.
FIG. 3A is a side cross sectional view of the clamp device when the application of the external force to the operational member is canceled in the clamp device shown in FIG. 2A.
FIG. 3B is an unfolded diagram of the cam groove part when the clamp device is in the state shown in FIG. 3A.
FIG. 4A is a side cross sectional view of the clamp device when the operational member is pressed again into the housing in the clamp device shown in FIG. 3A.
FIG. 4B is an unfolded diagram of the cam groove part when the clamp device is in the state shown in FIG. 4A.
FIG. 5A is a side cross sectional view of the clamp device when the application of the external force to the operational member is canceled and a work pallet is clamped in the clamp device shown in 4A.
FIG. 5B is an unfolded diagram of the cam groove part when the clamp device is in the state shown in FIG. 5A.
FIG. 6A shows a clamp device of Second Embodiment, and is a side cross sectional view of the clamp device in a clamping state.
FIG. 6B is a partial unfolded diagram of the cam groove part when the clamp device is in the state shown in FIG. 6A.
FIG. 7A is a side cross sectional view of the clamp device when an operating rod main body is pressed into a housing in the clamp device shown in FIG. 6A.
FIG. 7B is a partial unfolded diagram of the cam groove part when the clamp device is in the state shown in FIG. 7A.
FIG. 8A is a side cross sectional view of the clamp device when an operating rod main body is pressed into a housing in the clamp device shown in FIG. 7A.
FIG. 8B is a partial unfolded diagram of the cam groove part when the clamp device is in the state shown in FIG. 8A.
FIG. 9A is a side cross sectional view of the clamp device when the application of the external force to the operational member is canceled and a work pallet WP is moved up in the clamp device shown in FIG. 8A.
FIG. 9B is a partial unfolded diagram of the cam groove part when the clamp device is in the state shown in FIG. 9A.
FIG. 10A is a side cross sectional view of the clamp device when a work pallet WP is moved down and an operating rod main body is pressed into a housing in the clamp device shown in FIG. 9A.
FIG. 10B is a partial unfolded diagram of the cam groove part when the clamp device is in the state shown in FIG. 10A.
FIG. 11 shows a modification of the clamp device of Second Embodiment, and is a side cross sectional view of the clamp device in the clamping state.
FIG. 12 shows a modification of the clamp device of Second Embodiment, and is a side cross sectional view of the clamp device in the clamping state.

### [Description of Embodiments]

### (First Embodiment)

FIG. 1A to FIG. 5B show a clamp device of First Embodiment. With reference to drawings such as FIG. 1A, the following will describe the configuration of this clamp device. The clamp device fixes a work pallet WP that is a clamping object to a clamping pallet CP that is a base. This clamp device is a rotary clamp in which a clamp rod 5 rotates about its axial center. It is noted that the clamp device is not limited to this rotary clamp. That is to say, for example, as shown in FIG. 6A to FIG. 13, the clamp device may be arranged such that the clamp rod 5 does not rotate about its axial center.

The clamp device includes members such as a housing 1, a clamp rod 5, and an operating rod 20. To the clamping pallet CP, the housing 1 is fixed by using bolts (not illustrated). The housing 1 includes a housing body portion 2, a supporting cylinder portion 3 attached to the inside of the base end portion of the housing body portion 2, and a housing second main body portion 4 attached to a base-end-side end face of the housing second main body portion 2.

Into a cylindrical hole 2b formed in an upper wall 2a (leading end wall) of the housing body portion 2, a clamp rod 5 is inserted to be movable in an axial direction (up-down direction) of the clamp rod 5 and rotatable about an axial center of the clamp rod 5. To a leading end portion of the clamp rod 5, an arm 6 is fixed by using a bolt 7.

From the leading end side, the following portions are provided in the clamp rod 5 in order: a rod body portion 5a; a flange portion 5b larger than the rod body portion 5a in diameter; and a lower rod portion 5c. The lower rod portion 5c is inserted into the cylindrical hole 3a of the supporting cylinder portion 3.

In the outer circumferential surface of the lower rod portion 5c, three guide grooves 8 are formed to be apart from each other in the circumferential direction at predetermined intervals. Each of FIG. 1A, FIG. 2A, FIG. 3A, FIG. 4A, and FIG. 5A shows only one of the three guide grooves 8. Each guide groove 8 is a bow-shaped guide groove, and is formed in such a way that a spiral-shaped rotary groove 8a and a rectilinear straight groove 8b are connected. The three rotary grooves 8a are provided to be parallel to one another and the three straight grooves 8b are provided to in parallel to one another. The inclination angle of the rotary groove 8a is, for example, arranged to fall within a range between 20 degrees and 40 degrees relative to the radial direction (horizontal direction). As the inclination angle of the rotary groove 8a is set in this way, the lead of the rotary groove 8a is short and hence the stroke of the clamp rod 5 for rotation is small. It is noted that the number of the guide grooves 8 may not be three.

Into each of the above-described guide grooves 8, a ball 9 that is an engaging member is inserted. The ball 9 is rotatably supported by each of supporting holes 10 which are formed in an inner circumferential wall of the cylindrical hole 3a of the supporting cylinder portion 3 at predetermined intervals in the circumferential direction. Across these three balls 9, an annular sleeve 11 is externally fitted to be rotatable about the axial center. A V-shaped groove 11a is formed in the inner circumferential surface of the sleeve 11. Each ball 9 is able to rotate at two points, i.e., upper and lower points of the V-shaped groove 11a.

The rotation of the supporting cylinder portion 3 relative to the housing body portion 2 is prevented by a positioning pin 12. This makes it possible to align the position (phase) of the clamp rod 5 relative to the housing body portion 2 in the circumferential direction.

At a base-end-side end portion of the lower rod portion 5c, a ball 13 (spherical body) is rotatably provided as a power transmission member. The ball 13 is, for example, a ball made of metal. In the present embodiment, between a base-end-side end face of the lower rod portion 5c and the ball 13, balls 14 are provided as bearing members for the power transmission member. The balls 14 are accommodated in a recess 15 formed in the base-end-side end face of the lower rod portion 5c. Each ball 14 is, for example, a ball made of metal. The balls 14 are able to receive the load of the clamp rod 5 exerted in the axial direction. Because the balls 14 are accommodated in the recess 15, they are able to partially receive a load exerted in a direction orthogonal to the axial direction.

In a cylindrical hole space on the leading end side of the housing body portion 2, a spring 16 is provided as a biasing member which biases the flange portion 5b of the clamp rod 5 downward (i.e., toward the base end side). The spring 16 is a compression coil spring. The lower end of the spring 16 is received by a ring-shaped spring receiver 17. Between the spring receiver 17 and the flange portion 5b, balls 18 are provided as bearing members for the biasing member. Each ball 18 is, for example, a ball made of metal. The balls 18 are able to receive the load of the clamp rod 5 exerted in the axial direction. The movement of the spring receiver 17 in the up-down direction (axial direction) is restricted by a retaining ring 19. The rotation of the spring receiver 17 about the axial direction is not restricted by the clamp rod 5. In other words, the clamp rod 5 is rotatable about the axial center relative to the spring receiver 17. Due to the presence of the balls 18, there is a narrow gap between the bottom surface of the spring receiver 17 and the top surface of the flange portion 5b.

It is also possible to use a spring of another type such as a disc spring in place of the compression coil spring as spring 16.

Inside the housing second body portion 4, the operating rod 20 is provided to be movable in an axial direction (up-down direction) of the operating rod 20 and rotatable about the axial center of the operating rod 20. The operating rod 20 is arranged in series with the clamp rod 5. The axial direction of the clamp rod 5 is identical with the axial direction of the operating rod 20. The axial center of the clamp rod 5 is identical with the axial center of the operating rod 20. The axial center of the clamp rod 5 may be slightly deviated from the axial center of the operating rod 20. The ball 13 as a power transmission member is arranged between the clamp rod 5 and the operating rod 20.

At a base-end-side end portion of the operating rod 20, a ball 21 (spherical body) is rotatably provided as an operational member. The ball 21 is, for example, a ball made of metal. In the present embodiment, between a base-end-side end face of the operating rod 20 and the ball 21, balls 22 are provided as bearing members for the operational member. The balls 22 are accommodated in a recess 23 formed in the base-end-side end face of the operating rod 20. Each ball 22 is, for example, a ball made of metal. The balls 22 are able to receive the load of the operating rod 20 exerted in the axial direction. Because the balls 22 are accommodated in the recess 23, they are able to partially receive a load exerted in a direction orthogonal to the axial direction.

The operational member is not limited to the ball 21 (spherical body).

To an outer circumferential portion of the base end of the operating rod 20, a cylindrical guide member 24 is screwed and fixed. An end portion of the guide member 24 is arranged to catch the ball 21 therein. The guide member 24 prevents the ball 21 from dropping and slides with the ball 21 at the inner circumferential surface of the end portion. The ball 21 partially protrudes from the end portion of the guide member 24.

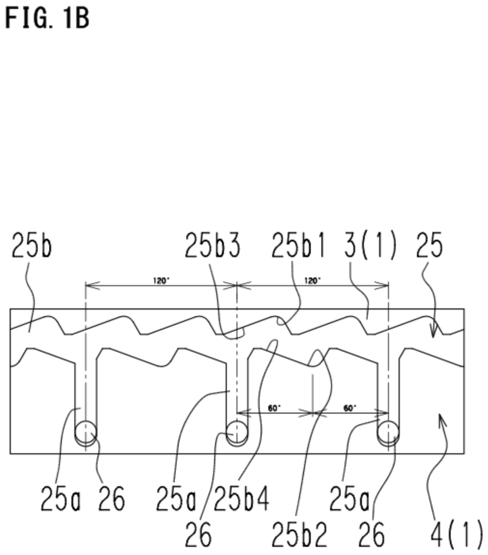

A cam groove 25 is formed in the inner surface of an upper portion of the housing second main body portion 4 constituting the housing 1. In the present embodiment, the cam groove 25 is formed by inner surface processing of the housing second body portion 4 and end face processing of the supporting cylinder portion 3. FIG. 1B, FIG. 2B, FIG. 3B, FIG. 4B, and FIG. 5B are unfolded diagrams of the cam groove 25 part.

The cam groove 25 includes rectilinear straight grooves 25a that extend in the axial direction of the operating rod 20 and a zigzag-shaped rotary groove 25b that extends in the circumferential direction of the operating rod 20. The rotary groove 25b extends from leading end portions of the straight grooves 25a in the circumferential direction of the operating rod 20. The rotary groove 25b is a groove for rotating the operating rod 20.

The straight grooves 25a are formed in the housing second main body portion 4. The straight grooves 25a are provided at predetermined intervals in the circumferential direction of the operating rod 20. Three straight grooves 25a are provided at equal intervals (120 degrees in the present embodiment) in the circumferential direction of the operating rod 20. The number of the straight grooves 25a may be one, two, or four or more.

As shown in drawings such as FIG. 1B, the zigzag-shaped rotary groove 25b has upper recesses 25b1 (leading-end-side recesses) and lower recesses 25b2 (base-end-side recesses). The upper recesses 25b1 are formed in the supporting cylinder portion 3. The upper recesses 25b1 are provided at predetermined intervals in the circumferential direction of the operating rod 20. Six upper recesses 25b1 are provided at equal intervals (60 degrees in the present embodiment) in the circumferential direction of the operating rod 20. A portion between neighboring upper recesses 25b1 is an upper sloped portion 25b3 (leading-end-side sloped portion) that is inclined relative to the circumferential direction of the operating rod 20. The upper sloped portions 25b3 serve as rotary guides for later-described balls 26. The number of the upper recesses 25b1 may be two, four or eight or more. The number of the upper recesses 25b1 is even.

The lower recesses 25b2 are formed in the housing second main body portion 4. The lower recesses 25b2 are provided at predetermined intervals in the circumferential direction of the operating rod 20. Three lower recesses 25b2 are provided at equal intervals (120 degrees in the present embodiment) in the circumferential direction of the operating rod 20. The number of the lower recesses 25b2 may be one, two, or four or more.

When multiple straight grooves 25a and multiple lower recesses 25b2 are provided, the straight grooves 25a and the lower recesses 25b2 are alternately provided in the circumferential direction of the operating rod 20. A portion between a straight groove 25a and a lower recess 25b2 is a lower sloped portion 25b4 (base-end-side sloped portion) that is inclined relative to the circumferential direction of the operating rod 20. The lower sloped portions 25b4 serve as rotary guides for the later-described balls 26.

The balls 26 (spherical bodies) are provided in the above-described cam groove 25, as protrusions. Each ball 26 is rotatably supported in a hole 20a formed in the outer peripheral surface of the operating rod 20. The balls 26 and the holes 20a are provided at predetermined intervals in the circumferential direction of the operating rod 20. Three balls 26 and three holes 20a are provided at equal intervals (120 degrees in the present embodiment) in the circumferential direction of the operating rod 20. The balls 26, the number of which is identical with the number of the straight grooves 25a, are provided at equal intervals in the circumferential direction of the operating rod 20. The number of the balls 26 may be one, two, or four or more.

The protrusion that is provided in the cam groove 25 and on the outer circumferential surface of the operating rod 20 is not limited to the ball 26. For example, the protrusion may be a columnar object that protrudes from a side surface of the operating rod 20.

The cam groove 25 fixes the operating rod 20 at a position where the operating rod 20 has been moved toward the leading end side (upward in the present embodiment), when the operating rod 20 is pressed into the housing second body portion 4 through the intermediary of the ball 21. The cam groove 25 allows the movement of the operating rod 20 toward the base end side (downward in the present embodiment), when the operating rod 20 is pressed again into the housing second body portion 4 through the intermediary of the ball 21. The direction toward the leading end side is an unclamping direction, whereas the direction toward the base end side is a clamping direction.

A spring 27 is provided in a cylindrical hole space on the base end side of the housing second body portion 4 in order to press the operating rod 20 downward (i.e., toward the base end side). The spring 27 is a compression coil spring. The lower end of the spring 27 is received by a retaining ring 28 fixed to the side surface of the operating rod 20. The spring constant (elastic force) of the spring 27 is sufficiently smaller than the spring constant (elastic force) of the spring 16. The spring 27 may be omitted.

The above-described clamp device operates as follows.

The clamp device is initially in a state shown in FIG. 1A. That is, no external force is applied to the ball 21 that is an operational member, and the clamp rod 5 is at the lowest position. When no external force is acting on the ball 21, the spring 16 presses the clamp rod 5 downward (toward the base end side) through the spring receiver 17, and the clamp rod 5 descends. When there is no clamping object, the flange part 5b of the clamp rod 5 is received on the top surface of the supporting cylinder portion 3 (see FIG. 1A), with the result that the clamp rod 5 can no longer descend and stops. This stop position is the lowest position of the clamp rod 5.

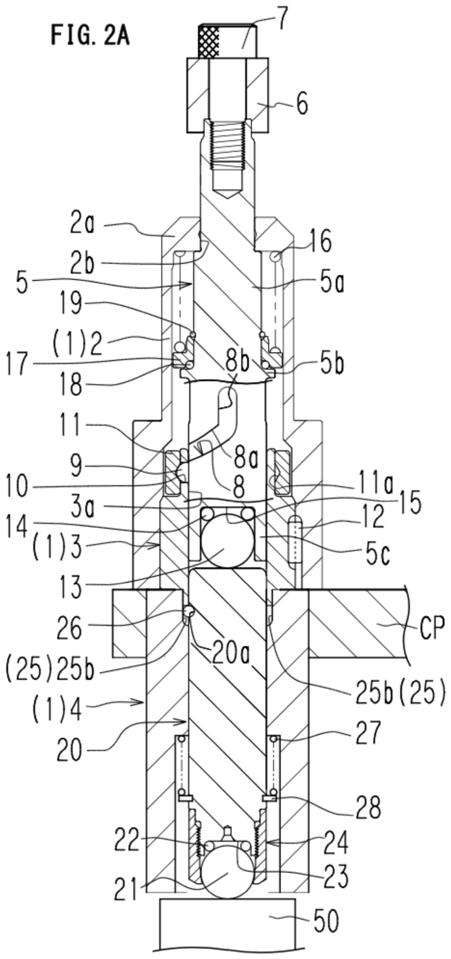

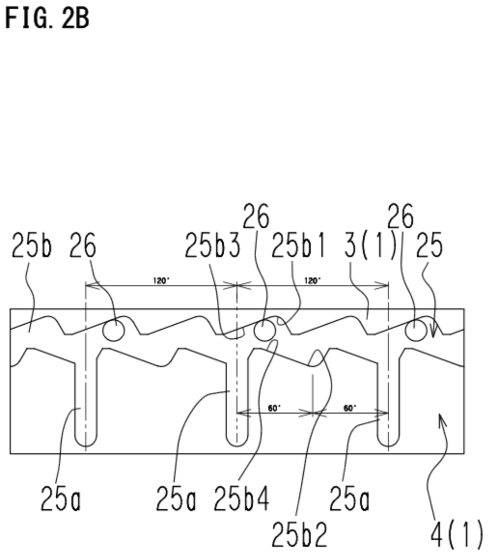

When the clamp device is in the state shown in FIG. 1A, as the ball 21 is pressed upward by, for example, a member 50 (see FIG. 2A) from below, the operating rod 20 is pressed into the housing second main body portion 4. As a result, the operating rod 20 presses the clamp rod 5 upward (toward the leading end side) against the biasing force of the spring 16, and the operating rod 20 and the clamp rod 5 ascend. After linearly ascending along the straight grooves 25a of the cam groove 25, the operating rod 20 rotates clockwise along the upper sloped portions 25b3 of the rotary groove 25b of the cam groove 25. Subsequently, as the balls 26 fit into the upper recesses 25b1 (see FIG. 2B), the rotation of the operating rod 20 stops. The clamp rod 5 ascends straight up along the straight grooves 8b of the guide grooves 8, and then ascends while rotating counterclockwise along the rotary grooves 8a. As the balls 26 fit into the upper recesses 25b1, the ascension of the clamp rod 5 stops.

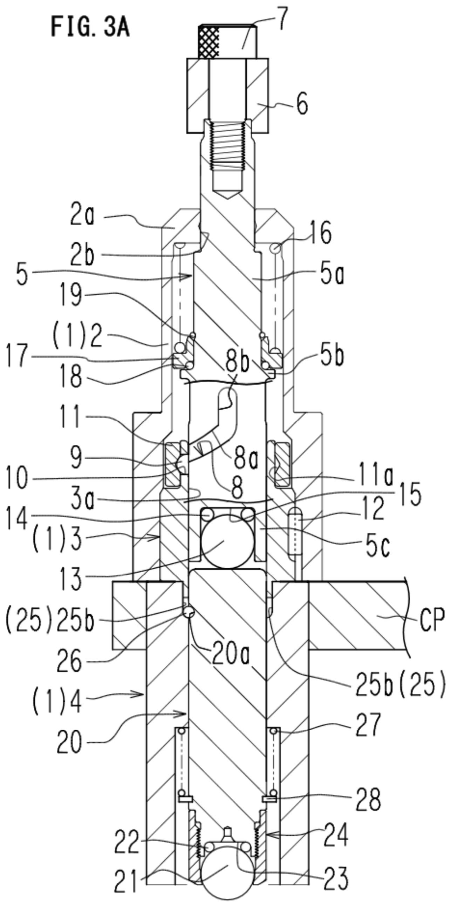

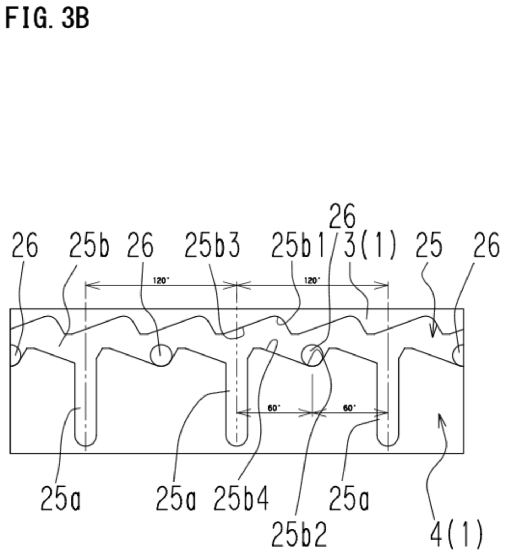

Subsequently, the external force applied to the ball 21 is canceled by, for example, moving the member 50 downward. As a result, the operating rod 20 is pressed downward by the biasing force of the spring 16, and the operating rod 20 rotates clockwise along the lower sloped portions 25b4 of the rotary groove 25b. Subsequently, as the balls 26 fit into the lower recesses 25b2 (see FIG. 3B), the rotation of the operating rod 20 stops. In this way, the operating rod 20 is fixed by the cam groove 25 at a position where the operating rod 20 has been moved toward the leading end side as compared to the initial position shown in FIG. 1A (i.e., the downward movement is restricted). When the clamp device is switched from the state shown in FIG. 2A to the state shown in FIG. 3A, the operating rod 20 and the clamp rod 5 descend. However, the amount of the descension is very small. The operating rod 20 and the clamp rod 5 descend only by a distance approximately equal to the slight groove width of the rotary groove 25b.

The clamp device shown in FIG. 3A is in the unclamping state. In the clamp device of the present embodiment, the unclamping state of the clamp device can be maintained without requiring the ball 21 to be continuously pressed by the member 50. i.e., without requiring the external force to be continuously applied to the ball 21 that is an operational member.

Subsequently, assume that the work pallet WP is placed on the clamping pallet CP.

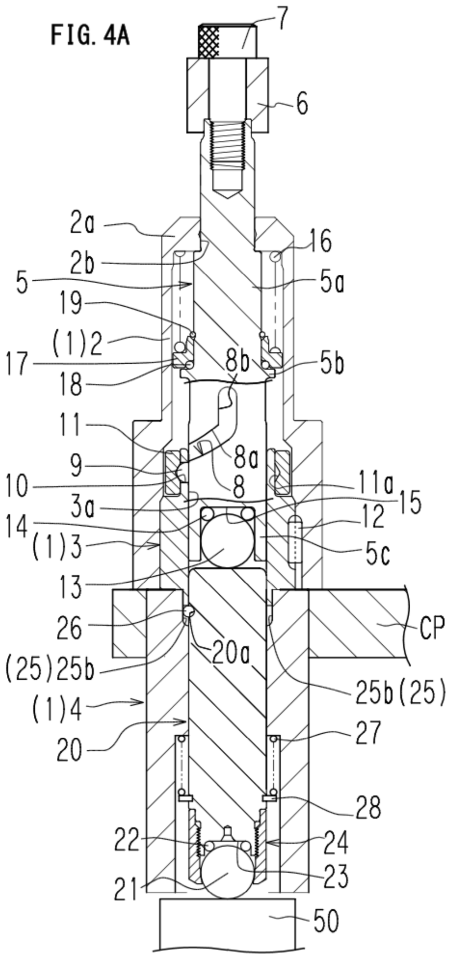

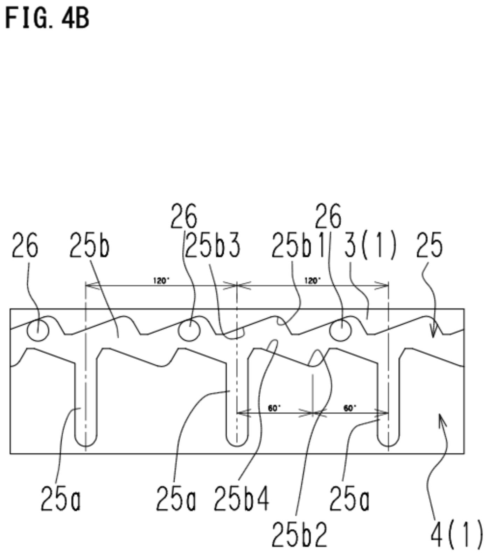

In this state, the ball 21 is pressed again upward from below by the member 50, so that the operating rod 20 is pressed into the housing second main body portion 4. As a result, the operating rod 20 presses the clamp rod 5 upward (toward the leading end side), and the operating rod 20 rotates clockwise along the upper sloped portions 25b3 of the rotary groove 25b. Subsequently, as the balls 26 fit into the upper recesses 25b1 (see FIG. 4B), the rotation of the operating rod 20 stops. When the clamp device is switched from the state shown in FIG. 3A to the state shown in FIG. 4A, the operating rod 20 and the clamp rod 5 ascend. However, the amount of the ascension is very small. The operating rod 20 and the clamp rod 5 ascend only by a distance approximately equal to the slight groove width of the rotary groove 25b.

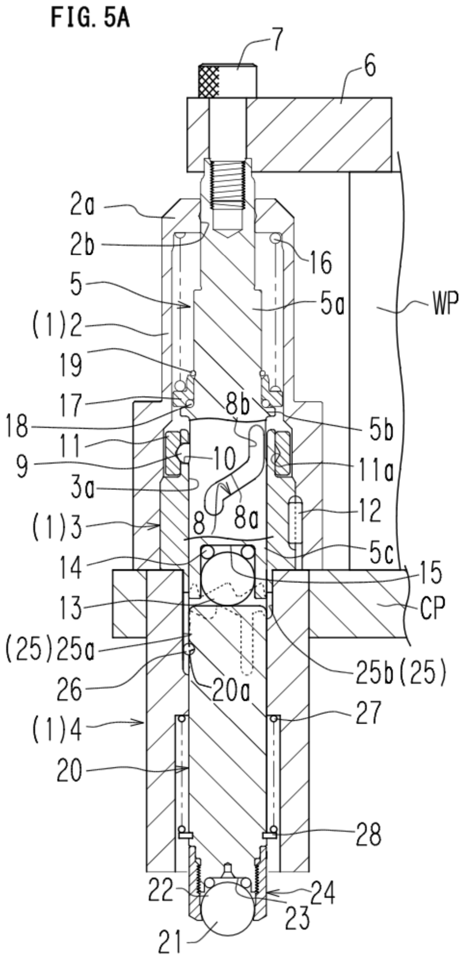

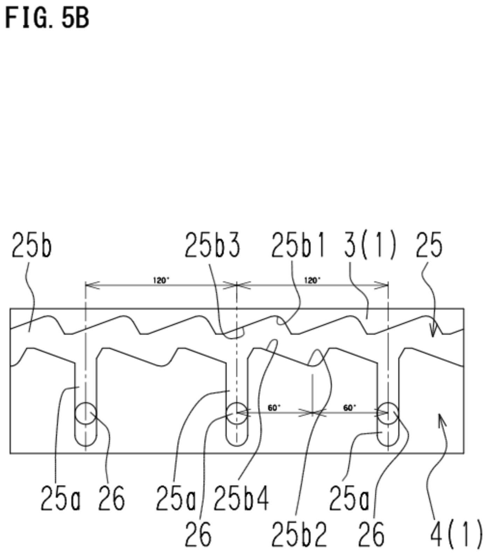

Subsequently, the external force applied to the ball 21 is canceled by, for example, moving the member 50 downward. As a result, as shown in FIG. 5A, the operating rod 20 and the clamp rod 5 in the state shown in FIG. 4A descend due to the biasing force of the spring 16. The operating rod 20 rotates clockwise along the lower sloped portions 25b4 of the rotary groove 25b. As the balls 26 enter the straight grooves 25a of the rotary groove 25b, the operating rod 20 linearly descends along the straight grooves 25a. The clamp rod 5 descends while rotating clockwise along the rotary grooves 8a of the guide grooves 8, and then linearly descends along straight grooves 8b. The leading end portion of the arm 6 presses the work pallet WP from above. As a result, the clamp device becomes in the clamping state.

When switching the clamp device from the clamping state shown in FIG. 5A to the unclamping state shown in FIG. 3A, the operating rod 20 is pressed into the housing second main body portion 4 by pressing the ball 21 upward from below by the member 50. As a result, the operating rod 20 presses the clamp rod 5 upward (toward the leading end side), and the operating rod 20 and the clamp rod 5 ascend. After linearly ascending along the straight grooves 25a of the cam groove 25, the operating rod 20 rotates clockwise along the upper sloped portions 25b3 of the rotary groove 25b of the cam groove 25. Subsequently, as the balls 26 fit into the upper recesses 25b1, the rotation of the operating rod 20 stops. The clamp rod 5 ascends straight up along the straight grooves 8b of the guide grooves 8, and then ascends along the rotary grooves 8a while rotating counterclockwise. As the balls 26 fit into the upper recesses 25b1, the ascension of the clamp rod 5 stops.

Subsequently, the external force applied to the ball 21 is canceled by, for example, moving the member 50 downward. As a result, the operating rod 20 is pressed downward by the biasing force of the spring 16, and the operating rod 20 rotates clockwise along the lower sloped portions 25b4 of the rotary groove 25b. Subsequently, as the balls 26 fit into the lower recesses 25b2 (see FIG. 3B), the rotation of the operating rod 20 stops. In this way, the operating rod 20 is fixed by the cam groove 25 at a position where the operating rod 20 has been moved toward the leading end side as compared to the clamping position shown in FIG. 5A (i.e., the downward movement is restricted).

In the clamp device of the present embodiment, the unclamping state of the clamp device can be maintained without requiring the ball 21 to be continuously pressed by the member 50. i.e., without requiring the external force to be continuously applied to the ball 21 that is an operational member.

In addition to the above, the clamp device of the present embodiment has the following advantages.

The clamp device does not have chambers such as a clamping chamber and an unclamping chamber of the known clamp device disclosed in Japanese Laid-Open Patent Publication No. 2018-43324, to which and from which pressure fluid is supplied and discharged each time the device is driven. In the clamp device of the present embodiment, as the ball 21 is moved (pressed upward) by the external force, the clamp rod 5 is moved toward the leading end side. Toward the base end side opposite to the leading end side, the clamp rod 5 is moved by the spring 16. Therefore, the clamp device of the present embodiment does not require pressure fluid such as compressed air for the drive.

The cam groove 25 has multiple straight grooves 25a, protrusions (balls 26) that are identical in number with the straight grooves 25a are provided, and the protrusions (balls 26) are provided in the respective straight grooves 25a. According to this arrangement, it is possible to distribute the force received by the protrusions (balls 26), allowing for smooth movement of the operating rod 20 including rotation.

By providing the rotatable power transmission member (ball 13) between the clamp rod 5 and the operating rod 20, the friction between the clamp rod 5 and the operating rod 20 can be reduced and the operating rod 20 can be smoothly rotated.

When the clamp rod 5 ascends while rotating, the balls 18 which are provided between the spring receiver 17 and the flange portion 5b of the clamp rod 5 and function as the bearing members for the biasing member rotate around the rod body portion 5a in accordance with the rotation of the clamp rod 5. The friction force between the balls 18 and the flange portion 5b is small, and hence the clamp rod 5 ascends while smoothly rotating. The same applies when the clamp rod 5 descends while rotating, as the clamp rod 5 descends while smoothly rotating due to the rolling of the balls 18.

### (Second Embodiment)

FIG. 6A to FIG. 10B show a clamp device of Second Embodiment. With reference to drawings such as FIG. 6A, the following will first describe the configuration of this clamp device. The clamp device fixes a work pallet WP that is a clamping object to a clamping pallet CP that is a base. The clamp device includes members such as a housing 1, a clamp rod 5, and an operating rod 20.

To the clamping pallet CP, the housing 1 is fixed by using bolts (not illustrated). The housing 1 is composed of a housing body portion 2 and a housing second main body portion 4 attached to a base-end-side end face of the housing body portion 2.

From the housing body portion 2, a cylindrical plug member 29 which is integrated with the housing main body portion 2 protrudes upward. The plug member 29 is a part of the housing body portion 2. Into a plug member cylindrical hole 29a of the plug member 29, an upper rod part 5d of the clamp rod 5 is inserted to be movable in an up-down direction (axial direction of the plug member cylindrical hole 29a). The axial direction of the clamp rod 5 is identical with the axial direction of the plug member cylindrical hole 29a.

A cylindrical hole 2c is formed on the base end side of the housing body portion 2, and a lower rod part 5e of the clamp rod 5 is inserted into the cylindrical hole 2c to be movable in the up-down direction. The cylindrical hole 2c is larger in diameter than the plug member cylindrical hole 29a. The plug member cylindrical hole 29a and the cylindrical hole 2c are formed to be vertically connected with each other. The axial direction of the cylindrical hole 2c is identical with the axial direction of the plug member cylindrical hole 29a.

A stepped portion 5f is provided at a leading-end-side part of the lower rod part 5e (an intermediate portion in the axial direction of the clamp rod 5). This stepped portion 5f restricts the movement of the clamp rod 5 upward (toward the leading end side). When the stepped portion 5f impinges on the inner surface of the housing body portion 2, the clamp rod 5 can no longer ascend.

At a base-end-side end portion of the lower rod part 5e, a ball 13 (spherical body) is rotatably provided as a power transmission member. The ball 13 is, for example, a ball made of metal. In the present embodiment, the ball 13 is provided in a recess 15 formed in a base-end-side end face of the lower rod part 5e. The ball 13 is prevented from being dropped out of the recess 15 by a retaining ring 30 (ring-shaped stopper). The retaining ring 30 is attached to the inner circumferential surface of the recess 15. A part of the ball 13 protrudes outward in the axial direction from an end face of the lower rod part 5e of the clamp rod 5. Furthermore, between the bottom surface of the recess 15 and the ball 13, balls 14 are provided as bearing members for the power transmission member. Each ball 14 is, for example, a ball made of metal. The balls 14 are able to receive the load of the clamp rod 5 exerted in the axial direction. Because the balls 14 are accommodated in the recess 15, they are able to partially receive a load exerted in a direction orthogonal to the axial direction.

The base end portion of the lower rod part 5e where the recess 15 is formed is a piston portion 31 (large diameter portion) that is larger in diameter than the other parts of the clamp rod 5. In a space above the piston portion 31 in the cylindrical hole 2c, a spring 16 is provided as a biasing member for biasing the piston portion 31 downward (i.e., toward the base end side). The spring 16 is a compression coil spring. The spring 16 of the present embodiment is composed of a first spring 16a and a second spring 16b. The second spring 16b is larger in diameter than the first spring 16a. On the top surface (leading-end-side surface) of the piston portion 31, a first stepped portion 31a receiving the lower end of the first spring 16a and a second stepped portion 31b receiving the lower end of the second spring 16b are provided in this order from the inner side. Above the first spring 16a, a ring-shaped spring receiver 32 is provided to receive the upper end of the first spring 16a. Above the second spring 16b, a ring-shaped spring receiver 33 is provided to receive the upper end of the second spring 16b.

The spring 16 may not be composed of two springs. Alternatively, a spring of another type such as a disc spring may be employed in place of the compression coil spring.

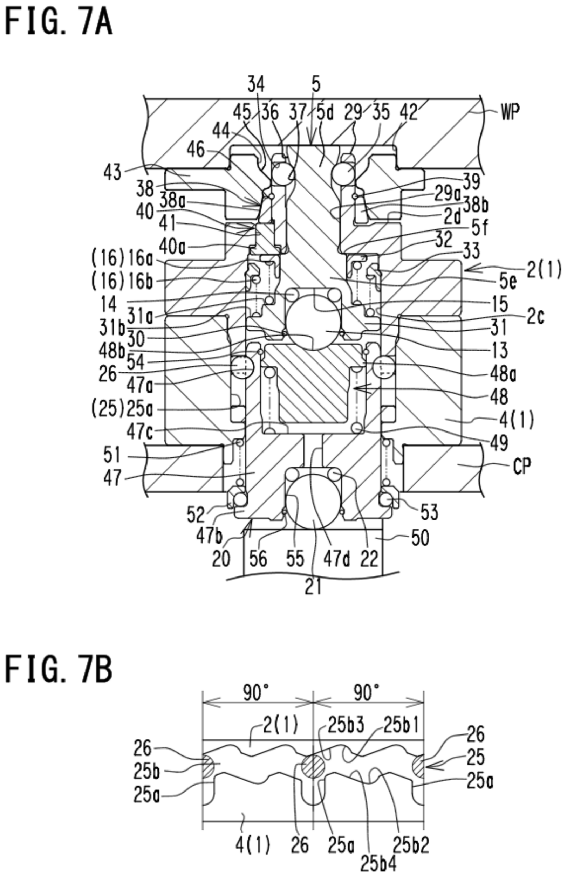

At an upper portion of the circumferential wall of the plug member 29, through holes 34 are formed to be aligned in the circumferential direction at predetermined intervals. Into each through hole 34, a ball 35 (engaging ball) that is an engaging member is inserted. The through hole 34 supports each ball 35 to be movable between a position (inside position) that is on the inner side in the radial direction shown in drawings such as FIG. 7A and a position (outside position) that is on the outer side in the radial direction shown in FIG. 6A.

In the outer circumferential wall of the upper rod part 5d of the clamp rod 5, a pressing surface 36 and a retracting groove 37 are formed and vertically aligned, so as to correspond to each ball 35. The pressing surface 36 is arranged to increase the width upward. As a result of movement to a position where the pressing surface 36 opposes the ball 35, the ball 35 is moved to the outside position so as to protrude outward in the radial direction as compared to the outer circumferential surface of the plug member 29. Furthermore, as a result of movement to a retracting position where the retracting groove 37 opposes the ball 35 and the ball 35 becomes insertable, the ball 35 becomes movable inward in the radial direction as compared to the outer circumferential surface of the plug member 29. While in the present embodiment each of the four balls 35 is inserted into each through hole 34, the number of the balls 35 is not limited to four.

Over a lower portion (base portion) of the circumferential wall of the plug member 29, an annular collet 38 is fitted. The collet 38 has a tapered outer circumferential surface 38a that is tapered off toward the top, and can be elastically decreased in diameter thanks to a single slit 38b extending in the up-down direction. The retaining ring 39 prevents the collet 38 from slipping out from the plug member 29 (i.e., restricts the upward movement). In a top surface 2d of the housing body portion 2, through holes 41 are formed to be aligned in the circumferential direction at predetermined intervals. In each of the through holes 41, a pressing member 40 pressing the collet 38 upward (i.e., toward the leading end side) is inserted. The pressing member 40 is columnar in shape and has a large diameter portion 40a (flange portion) at a lower end portion. At the large diameter portion 40a, the pressing member 40 is supported from below by the spring receiver 32. The collet 38 is biased upward by the first spring 16a through the pressing member 40 and the spring receiver 32. On this account, even though the upward movement is restricted by the retaining ring 39, the collet 38 is slightly movable in the up-down direction. While in the present embodiment each of the three pressing members 40 is inserted into each through hole 41, the number of the pressing members 40 is not limited to three.

In a bottom surface of the work pallet WP, a recess 42 is formed. A ring member 43 is attached to the recess 42, and the ring member 43 is fixed to the work pallet WP by bolts (not illustrated). The inner circumferential surface of the ring member 43 forms a fitting hole 44, and the plug member 29 is insertable into the fitting hole 44.

In the fitting hole 44 of the ring member 43, an engaging portion 45 is formed to be tapered and widen upward. Below the engaging portion 45, a tapered inner circumferential surface 46 is formed to be engaged with a tapered outer circumferential surface 38a of the collet 38. The tapered inner circumferential surface 46 is arranged to be tapered off toward the top, i.e., to narrow upward.

While in the present embodiment the fitting hole 44 is formed in the ring member 43, the fitting hole 44 may be formed by the inner circumference of the recess 42 of the work pallet WP. In other words, the engaging portion 45 and the tapered inner circumferential surface 46 described above may be formed directly in the inner circumference of the recess 42 of the work pallet WP.

Inside the housing second body portion 4, the operating rod 20 is provided to be movable in the axial direction (up-down direction) and rotatable about the axial center. The operating rod 20 is arranged in series with the clamp rod 5. The operating rod 20 is composed of an operating rod body 47, a movable member 48, and a spring 49 that is a second biasing member. The spring 49 is a compression coil spring. The axial direction of the clamp rod 5 is identical with the axial direction of the operating rod main body 47.

The operating rod main body 47 is cylindrical in shape, and holes 47a are formed at an upper part of the outer circumferential surface of the operating rod main body 47 to allow balls 26 (spherical body) to be accommodated therein as protrusions. The balls 26 are supported by the holes 47a to be rotatable. The balls 26 and holes 47a are provided at predetermined intervals in the circumferential direction of the operating rod main body 47. Four balls 26 and four holes 47a are provided at equal intervals (90 degrees in the present embodiment) in the circumferential direction of the operating rod main body 47. The balls 26, the number of which is identical with the number of straight grooves 25a of a later-described cam groove 25, are provided at equal intervals in the circumferential direction of the operating rod main body 47. It is noted that the number of the balls 26 may not be four. Furthermore, the protrusions provided on the outer peripheral surface of the operating rod main body 47 are not limited to the balls 26. For example, each protrusion may be a columnar object which is integrated with the operating rod main body 47 and protrudes from the outer peripheral surface of the operating rod main body 47.

A spring 51 is provided outside a lower portion of the operating rod main body 47 to press the operating rod main body 47 downward (i.e., toward the base end side). The spring 51 is a compression coil spring. The upper end of the spring 51 is received by the housing second main body portion 4. The lower end of the spring 51 is received by a ring-shaped spring receiver 52. Between the spring receiver 52 and a flange portion 47b at the lower end of the operating rod main body 47, multiple balls 53 are provided. The balls 53 are, for example, balls made of metal. Due to the presence of the rotatably balls 53, the rotation of the spring receiver 52 about the axial direction is not restricted by the operating rod main body 47. Therefore, the operating rod main body 47 is rotatable about the axial center relative to the spring receiver 52.

The spring constant of the spring 51 is sufficiently smaller than the spring constant of any of the spring 16 and the spring 49. (In other words, the spring constant of the spring 51 is negligibly small.) The spring 51 is provided simply to suppress the operating rod main body 47 from rattling, and may not be provided. Because the spring 16 is made up of two springs, the spring constant of the spring 16 is the sum of the spring constants of the two springs (first spring 16a and second spring 16b).

A bottomed cylindrical hole 47c is formed on the leading end side of the operating rod main body 47, and a columnar movable member 48 and a stretchable spring 49 (second biasing member) are provided in this cylindrical hole 47c. The upper end of the spring 49 is received by a flange part 48a (large diameter portion) of the movable member 48. The lower end of the spring 49 is received by the bottom surface of the cylindrical hole 47c. The spring 49 biases the movable member 48 upward (toward the leading end side) relative to the operating rod main body 47. The movable member 48 presses and moves the clamp rod 5 upward (toward the leading end side) via the ball 13 by the biasing force of the spring 49. A concave surface 48b is formed on the leading end face of the movable member 48 to allow the ball 13 to be fitted therein. The movable member 48 does not drop out from the cylindrical hole 47c due to the presence of a retaining ring 54 (ring-shaped stopper). The retaining ring 54 is attached to an upper portion of the inner circumferential surface of the cylindrical hole 47c. A breathing hole 47d is formed in the bottom surface of the cylindrical hole 47c. When the movable member 48 descends in the cylindrical hole 47c, air is discharged from the breathing hole 47d. On the other hand, when the movable member 48 ascends, outside air flows into the cylindrical hole 47c through the breathing hole 47d.

In the present embodiment, the spring constant of the spring 49 is arranged to be larger than that of the spring 16. It is also possible to use a spring of another type such as a disc spring in place of the compression coil spring as the spring 49. The spring constant of the spring 49 may be identical with or smaller than the spring constant of the spring 16.

At a base-end-side end portion of the operating rod 47, a ball 21 (spherical body) is rotatably provided as an operational member. Each ball 21 is, for example, a ball made of metal. In the present embodiment, the ball 21 is provided in a recess 55 formed in a base-end-side end face of the operating rod main body 47. The ball 21 is prevented from being dropped out of the recess 55 by a retaining ring 56 (ring-shaped stopper). A part of the ball 21 protrudes outward in the axial direction of the operating rod main body 47 from the operating rod main body 47. Furthermore, between the bottom surface of the recess 55 and the ball 21, balls 22 are provided as bearing members for the operational member. The ball 22 is, for example, a ball made of metal. The balls 22 are able to receive the load of the operating rod 20 exerted in the axial direction. Because the balls 22 are accommodated in the recess 55, they are able to partially receive a load exerted in a direction orthogonal to the axial direction.

The operational member is not limited to the ball 21 (spherical body).

A cam groove 25 is formed in the inner surface of the housing second main body portion 4 constituting the housing 1, to accommodate a ball 26 therein. In the present embodiment, the cam groove 25 is formed by inner surface processing of the housing second main body portion 4 and end face processing of the housing body portion 2. FIG. 6B, FIG. 7B, FIG. 8B, FIG. 9B, and FIG. 10B are partial unfolded diagrams of the cam groove 25 part.

The cam groove 25 includes rectilinear straight grooves 25a that extend in the axial direction of the operating rod main body 47 and a zigzag-shaped rotary groove 25b that extends in the circumferential direction of the operating rod main body 47. The rotary groove 25b extends from leading end portions of the straight grooves 25a in the circumferential direction of the operating rod main body 47 and is formed to be zigzag in the up-down direction (axial direction of the operating rod main body 47), The rotary groove 25b is a groove for rotating the operating rod main body 47.

The straight grooves 25a are formed in the housing second main body portion 4. The straight grooves 25a are provided at predetermined intervals in the circumferential direction of the operating rod main body 47. Four straight grooves 25a are provided at equal intervals (90 degrees in the present embodiment) in the circumferential direction of the operating rod main body 47. It is noted that the number of the straight grooves 25a may not be four.

As shown in drawings such as FIG. 6B, the zigzag-shaped rotary groove 25b has upper recesses 25b1 (leading-end-side recesses) and lower recesses 25b2 (base-end-side recesses). The upper recesses 25b1 are formed in the housing body portion 2. The upper recesses 25b1 are provided at predetermined intervals in the circumferential direction of the operating rod main body 47. Eight upper recesses 25b1 are provided at equal intervals (45 degrees in the present embodiment) in the circumferential direction of the operating rod main body 47. A portion between neighboring upper recesses 25b1 is an upper sloped portion 25b3 (leading-end-side sloped portion) that is inclined relative to the circumferential direction of the operating rod main body 47. The upper sloped portions 25b3 serve as rotary guides for the balls 26. It is noted that the number of the upper recesses 25b1 may not be eight. The number of the upper recesses 25b1 is even.

The lower recesses 25b2 are formed in the housing second main body portion 4. The lower recesses 25b2 are provided at predetermined intervals in the circumferential direction of the operating rod main body 47. Four lower recesses 25b2 are provided at equal intervals (90 degrees in the present embodiment) in the circumferential direction of the operating rod main body 47. It is noted that the number of the lower recesses 25b2 may not be four.

When multiple straight grooves 25a and multiple lower recesses 25b2 are provided, the straight grooves 25a and the lower recesses 25b2 are alternately provided in the circumferential direction of the operating rod main body 47. A portion between a straight groove 25a and a lower recess 25b2 is a lower sloped portion 25b4 (base-end-side sloped portion) that is inclined relative to the circumferential direction of the operating rod main body 47. The lower sloped portions 25b4 serve as rotary guides for the balls 26.

The cam groove 25 fixes the operating rod main body 47 at a position where the operating rod main body 47 has been moved toward the leading end side (upward in the present embodiment), when the operating rod main body 47 is pressed into the housing second body portion 4. The cam groove 25 allows the movement of the operating rod main body 47 toward the base end side (downward in the present embodiment), when the operating rod main body 47 is pressed again into the housing second body portion 4. The direction toward the leading end side is an unclamping direction, whereas the direction toward the base end side is a clamping direction.

The above-described clamp device operates as follows.

In the clamping state shown in FIG. 6A, the spring 16 that is a biasing member presses the clamp rod 5 downward (toward the base end side), and the clamp rod 5 descends. As the clamp rod 5 descends, a pressing portion constituting part of the retracting groove 37 formed in the clamp rod 5 presses the ball 35 of the plug member 29 to a protruding position on the outer side in the radial direction. Subsequently, the pressing surface 36 of the clamp rod 5 presses the engaging portion 45 of the work pallet WP (ring member 43) downward via the ball 35. As a result, the collet 38 decreases in diameter and slightly descends together with the work pallet WP. Due to this, the bottom surface of the ring member 43 is received by the top surface 2d (seating surface) of the housing body portion 2, and the clamp device is switched to the clamping state shown in FIG. 6A. At this stage, no external force is applied to the ball 21 that is an operational member and each ball 26 is at the straight groove 25a part of the cam groove 25. Due to this, the operating rod main body 47 has been descended to the lowest position. In the present embodiment, a gap is formed between the movable member 48 and the ball 13.

When the clamp device is in the clamping state shown in FIG. 6A, as the ball 21 is pressed upward by, for example, a member 50 from below, the operating rod main body 47 is pressed into the housing second main body portion 4 (see FIG. 7A). As a result, the operating rod main body 47 first ascends straight along the straight grooves 25a of the cam groove 25. As the operating rod main body 47 ascends, the movable member 48 also ascends, and against the biasing force of the spring 16, the movable member 48 presses the ball 13 upward (toward the leading end side), causing the clamp rod 5 to ascend. As the clamp rod 5 ascends, the retracting groove 37 formed in the clamp rod 5 is positioned to oppose the ball 35 of the plug member 29, and the ball 35 becomes movable into the retracting groove 37 (i.e., inward in the radial direction of the clamp rod 5). In other words, the clamp device becomes in the unclamping state. At this time, as can be seen from the fact that the flange part 48a of the movable member 48 is separated downward from the retaining ring 54 in the cylindrical hole 47c, the movable member 48 is in a state of being slightly pressed into the cylindrical hole 47c of the operating rod main body 47 by the reaction force from the ball 13. The stepped portion 5f of the clamp rod 5 impinges on the inner surface of the housing body portion 2, or the leading end of the clamp rod 5 impinges on the bottom surface of the recess 42 of the work pallet WP, thereby restraining the ascension of the clamp rod 5. As a result, the movable member 48 is slightly pressed into the cylindrical hole 47c of the operating rod main body 47 by the reaction force from the ball 13.

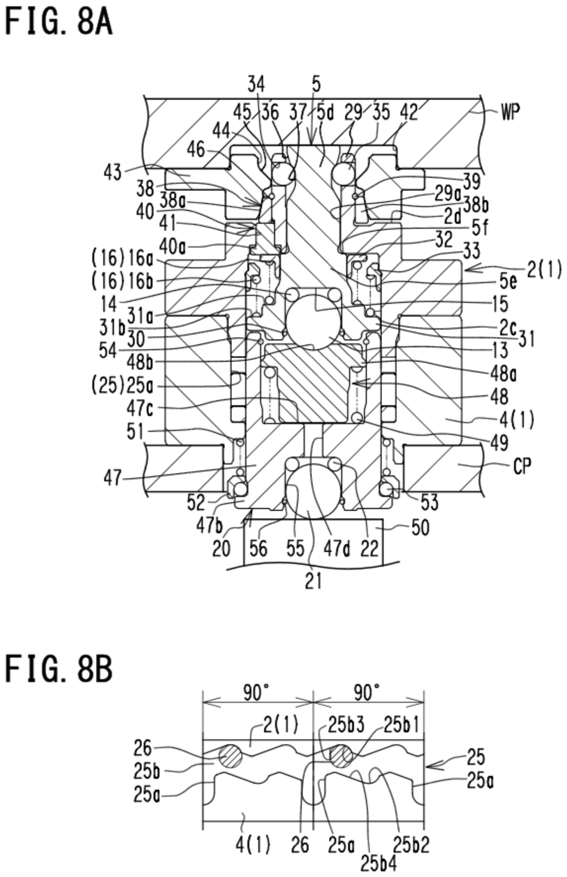

As shown in FIG. 8A, as the operating rod main body 47 is further pressed into the housing second main body portion 4, the operating rod main body 47 ascends while rotating along the upper sloped portions 25b3 of the rotary groove 25b of the cam groove 25. Subsequently, as the balls 26 fit into the upper recesses 25b1 (see FIG. 8B), the rotation of the operating rod main body 47 stops. On the other hand, because of the restraint of the ascension, the clamp rod 5 does not ascend any more. While the clamp rod 5 does not ascend, the operating rod main body 47 ascends. On this account, the movable member 48 is further pressed into the cylindrical hole 47c of the operating rod main body 47 by the reaction force from the ball 13.

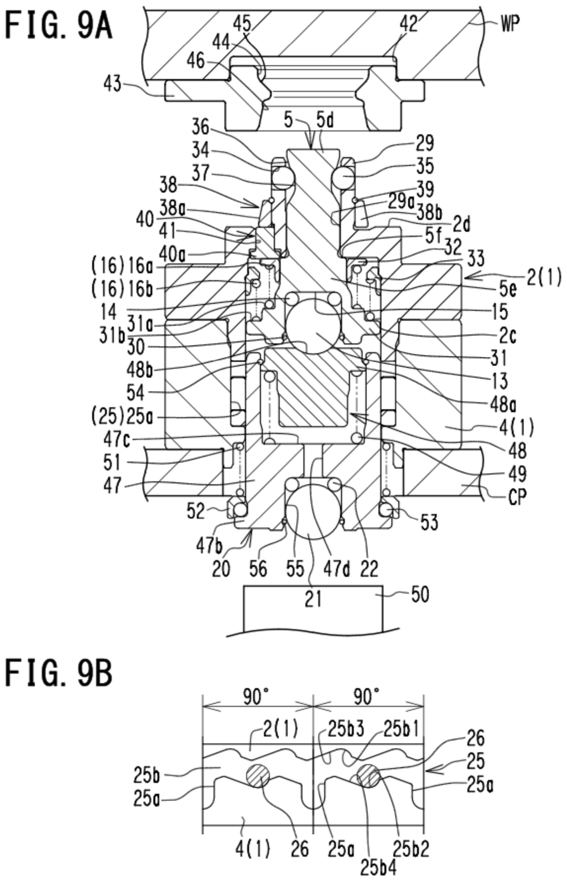

Subsequently, as shown in FIG. 9A, the external force applied to the ball 21 is canceled by, for example, moving the member 50 downward. As a result, the operating rod 47 is pressed downward by the biasing force of the spring 49, and the operating rod main body 47 rotates clockwise along the lower sloped portions 25b4 of the rotary groove 25b. Subsequently, as the balls 26 fit into the lower recesses 25b2 (see FIG. 9B), the rotation of the operating rod main body 47 stops. In this way, the operating rod main body 47 is fixed by the cam groove 25 at a position where the operating rod main body 47 has been moved toward the leading end side as compared to the clamping state shown in FIG. 6A (i.e., the downward movement is restricted). The clamp rod 5 does not descend because it is pressed upward by the movable member 48 by the biasing force of the spring 49 through the ball 13 that is a power transmission member. Therefore, the unclamping state of the clamp device is maintained even after the external force on the ball 21 is canceled. At this stage, the biasing force of the spring 49 is greater than the biasing force of the spring 16. As the work pallet WP is ascended as shown in FIG. 9A, the ring member 43 is detached from the plug member 29 of the housing 1 and the work pallet WP is detached from the clamping pallet CP.

When the work pallet WP is fixed to the clamping pallet CP again, the work pallet WP having been carried in above the clamp device is descended while the application of the external force to the ball 21 has been canceled (see FIG. 9A), and the plug member 29 is inserted into the fitting hole 44 of the ring member 43.

In this state, as shown in FIG. 10A, the ball 21 is pressed again upward from below by the member 50, so that the operating rod main body 47 is pressed into the housing second main body portion 4. Then, the operating rod main body 47 ascends while rotating clockwise along the upper sloped portions 25b3 of the rotary groove 25b. Subsequently, as the balls 26 fit into the upper recesses 25b1 (see FIG. 10B), the rotation of the operating rod main body 47 stops. While the clamp rod 5 does not ascend due to the restriction of the ascension, the operating rod main body 47 ascends. On this account, the movable member 48 is pressed into the cylindrical hole 47c of the operating rod main body 47 by the reaction force from the ball 13, as compared to the position shown in FIG. 9A.

Subsequently, the external force applied to the ball 21 is canceled by, for example, moving the member 50 downward. As a result, the operating rod main body 47 is pressed downward by the biasing force of the spring 49, and the operating rod main body 47 rotates clockwise along the lower sloped portions 25b4 of the rotary groove 25b. As the balls 26 enter the straight grooves 25a of the rotary groove 25b, the operating rod main body 47 linearly descends. As the operating rod main body 47 descends, the spring 49 stretches, and the biasing force of the spring 49 weakens as the operating rod main body 47 continues to descend. When the biasing force of the spring 16 as the biasing member exceeds the biasing force of the spring 49, the clamp rod 5 descends due to the biasing force of the spring 16. As the clamp rod 5 descends, a pressing portion constituting part of the retracting groove 37 formed in the clamp rod 5 presses the ball 35 of the plug member 29 to a protruding position on the outer side in the radial direction. Subsequently, the pressing surface 36 of the clamp rod 5 presses the engaging portion 45 of the work pallet WP (ring member 43) downward via the ball 35. As a result, the collet 38 decreases in diameter and slightly descends together with the work pallet WP. Due to this, the bottom surface of the ring member 43 is received by the top surface 2d (seating surface) of the housing body portion 2, and the clamp device is switched to the clamping state shown in FIG. 6A.

In the clamp device of the present embodiment, the unclamping state of the clamp device can be maintained without requiring the ball 21 to be continuously pressed by the member 50. i.e., without requiring the external force to be continuously applied to the ball 21 that is an operational member.

Furthermore, because the operating rod 20 is composed of the operating rod main body 47, the movable member 48, and the spring 49 as the second biasing member, it is possible to smoothly rotate the operating rod 20 (operating rod main body 47) even with the clamp rod 5 whose moving distance in the axial direction is short. Because the movable member 48 is arranged to move into the cylindrical hole 47c of the operating rod main body 47, the moving distance in the axial direction of the operating rod main body 47 is longer than the moving distance in the axial direction of the clamp rod 5. Therefore, the inclination angles of the upper sloped portions 25b3 and the lower sloped portions 25b4 that constitute the rotary groove 25b of the cam groove 25 can be made large enough to allow the operating rod main body 47 to sufficiently rotate (i.e., sufficient inclination angles can be easily secured). By securing the inclination angles of the upper sloped portions 25b3 and the lower sloped portions 25b4, the operating rod 20 (operating rod main body 47) can be smoothly rotated.

In addition to the above, the clamp device of the present embodiment has the following advantages.

The clamp device does not have chambers such as a clamping chamber and an unclamping chamber of the known clamp device disclosed in International Publication No. 2021/177385, to which and from which pressure fluid is supplied and discharged each time the device is driven. In the clamp device of the present embodiment, as the ball 21 (operating rod main body 47) is moved (pressed upward) by the external force, the clamp rod 5 is moved toward the leading end side. Toward the base end side opposite to the leading end side, the clamp rod 5 is moved by the spring 16 that is the biasing member. Therefore, the clamp device of the present embodiment does not require pressure fluid such as compressed air for the drive.

Because the spring constant of the spring 49 as the second biasing member is arranged to be larger than the spring constant of the spring 16 as the biasing member, it is possible to reliably move the clamp rod 5 toward the leading end side. Furthermore, the clamp rod 5 having been moved toward the leading end side is reliably maintained at this position.

The cam groove 25 has multiple straight grooves 25a, protrusions (balls 26) that are identical in number with the straight grooves 25a are provided, and the protrusions (balls 26) are provided in the respective straight grooves 25a. This arrangement prevents the operating rod 20 from being worn or damaged. It is therefore possible to smoothly operate the operating rod 20.

By providing the spherical rotatable power transmission member (ball 13) between the clamp rod 5 and the movable member 48, the friction between the clamp rod 5 and the movable member 48 can be reduced and the operating rod 20 (operating rod main body) 47 can be smoothly rotated.

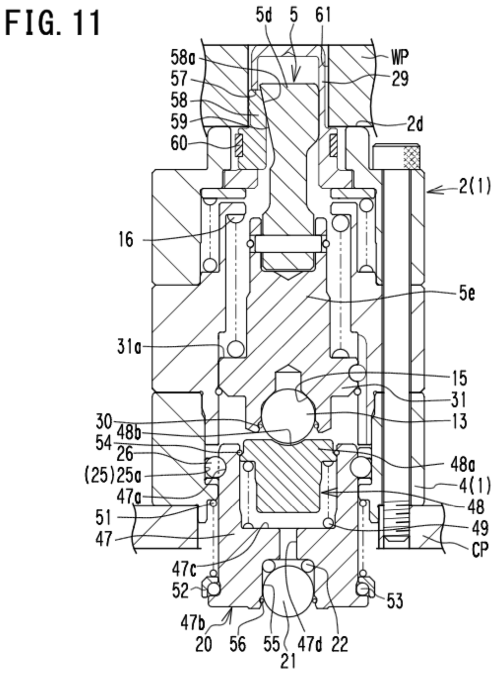

FIG. 11 shows a modification of the clamp device of Second Embodiment. FIG. 11 is a side cross sectional view of the clamp device in the clamping state according to the modification. The leading end portion of the clamp device may be structured as shown in FIG. 11 instead of the leading end portion of the clamp device shown in FIGs. 6A to 10B. The leading end portion of the clamp device shown in FIG. 11 has the following structure.

In the circumferential wall of the plug member 29 of the housing body portion 2, guide holes 57 are formed to be aligned in the circumferential direction at predetermined intervals. Into each of the guide holes 57, a locking member 58 (columnar member) that is a pressing member is inserted. The guide hole 57 supports each locking member 58 to be movable in the radial direction of the clamp rod 5. While the plug member 29 and the housing body portion 2 are independent from each other in the present embodiment, the plug member 29 and the housing body portion 2 may be integrated.

A surface on the clamp rod 5 side of the locking member 58 is a slope surface 58a whose lower side (base end side) is close to the axial center of the clamp rod 5. While each of three locking members 58 is inserted into each guide hole 57 in the present embodiment, the number of the locking members 58 is not limited to three.

A wedge surface 59 that engages with the slope surface 58a from the leading end side is formed at the leading end portion of the clamp rod 5. Three wedge surfaces 59 are provided to correspond to the number of the locking members 58. In the present embodiment, both the wedge surface 59 and the slope surface 58a are composed of flat planes. A thin ring 60 made of an elastic material such as rubber, resin, or a metal spring is attached to a lower part of each of the three locking members 58 and a lower part of the plug member 29. The elastic force of the ring 60 biases each locking member 58 inward in the radial direction toward the axial center of the clamp rod 5. The means (structure) for moving the locking member 58 inward in the radial direction toward the axial center of the clamp rod 5 is not limited to the ring 60.

When the clamp rod 5 descends (moves toward the base end side), the locking member 58 is moved outward in the radial direction by the wedge surface 59 of the clamp rod 5. As a result, the locking member 58 presses the inner circumferential surface of the hole 61 of the work pallet WP. As a result, the clamp device becomes in the clamping state. When the clamp rod 5 ascends (moves toward the leading end side), the locking member 58 is moved in the axial direction of the clamp rod 5 by the elastic force of the ring 60. As a result, the clamp device becomes in the unclamping state.

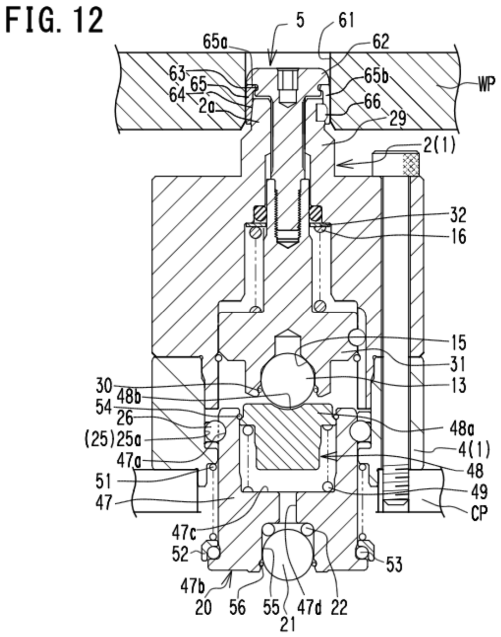

FIG. 12 shows a modification of the clamp device of Second Embodiment. FIG. 12 is a side cross sectional view of the clamp device in the clamping state according to the modification. The leading end portion of the clamp device may be structured as shown in FIG. 12 instead of the leading end portion of the clamp device shown in FIGs. 6A to 10B. The leading end portion of the clamp device shown in FIG. 12 has the following structure.

The leading end portion of the clamp rod 5 is a cap part 62 that is larger in diameter than the other parts of the clamp rod 5. An annular groove 63 is formed in the outer circumferential wall of the cap part 62.

An outer slope surface 64 on the outer circumference of the plug member 29 of the housing body portion 2 tapers off toward the leading end in the axial direction. With the outer slope surface 64, a cylindrical pressing member 65 is engaged. An annular protrusion 65a projects inward in the radial direction from the upper end of the pressing member 65. As the protrusion 65a is fitted into the groove 63 of the cap part 62, the pressing member 65 is connected to the leading end portion of the clamp rod 5. By providing a slit 65b in the circumferential wall of the pressing member 65, the pressing member 65 can expand and contract in the radial direction (i.e., is elastically deformable). A pin 66 protrudes outward in the radial direction from the outer circumferential surface of the plug member 29 of the housing body portion 2. The pin 66 serves to stop the rotation of the pressing member 65.

When the clamp rod 5 descends (moves toward the base end side), the pressing member 65 in a reduced diameter state expands in diameter due to the outer slope surface 64 of the plug member 29 (i.e., expands radially). As a result, the pressing member 65 presses the inner circumferential surface of the hole 61 of the work pallet WP. Consequently, the clamp device becomes in the clamping state. When the clamp rod 5 ascends (moves toward the leading end side), the pressing member 65 contracts due to the elastic force of the pressing member 65. Consequently, the clamp device becomes in the unclamping state.

The present invention is not limited to the embodiments above and modifications thereof, and elements of the embodiments above can be combined as appropriate or various changes can be made to the embodiments and modifications, as long as not departing from the spirit of the present invention.

For example, the above-described embodiments are changeable as follows.

The ball 21 that is the operational member may be pressed by a human hand (i.e., manually) to move the operating rod 20 toward the leading end side. Without providing the operational member such as the ball 21, an external force may be directly applied to the operating rod 20 to the move operating rod 20.

The rotary groove 25b of the cam groove 25 may be formed so that the operating rod 20 rotates not clockwise but counterclockwise.

An air spring may be used in place of the spring 16 such as a compression coil spring.

The clamp device may be attached to a table or a leading end portion of a robot. The clamping object may be a workpiece or a mold.

### [Reference Signs List]

1: housing, 5: clamp rod, 13: ball (spherical body, power transmission member), 14: ball (bearing member for power transmission member), 16: spring (biasing member), 20: operating rod, 20a: hole, 21: ball (spherical body, operational member), 22: ball (bearing member for operational member), 25: cam groove, 25a: straight groove, 25b: rotary groove, 25b1: upper recess (leading-end-side recess), 25b2: lower recess (base-end-side recess, 25b3: upper sloped portion (leading-end-side sloped portion), 25b4: lower sloped portion (base-end-side sloped portion), 26: ball (spherical body, protrusion), 29: plug member, 34: through hole, 35: ball (engaging member), 44: fitting hole, 45: engaging portion, 47: operating rod main body, 47a: hole, 47c: cylindrical hole, 48: movable member, 49: spring (second biasing member)

## Claims

1. A clamp device comprising:
a housing (1);
a clamp rod (5) which is provided in the housing (1) to be movable in an axial direction;
an operating rod (20) which is provided in the housing (1) to be in series with the clamp rod (5), which is rotatable about an axial center, and is configured to press and move the clamp rod (5) toward the leading end side in the axial direction;
a biasing member (16) which is provided in a leading-end-side part of the housing (1) and is configured to press and move the clamp rod (5) toward the base end side in the axial direction; and
at least one protrusion (26) which is provided on the outer circumferential surface of the operating rod (20),
a cam groove (25) in which the at least one protrusion (26) is accommodated being formed in an inner surface of the housing (1), the cam groove (25) fixing the operating rod (20) at a position where the operating rod (20) is moved to the leading end side when the operating rod (20) is pressed into the housing (1), and the cam groove (25) allowing movement of the operating rod (20) toward the base end side when the operating rod (20) is pressed into the housing (1) again.

2. The clamp device according to claim 1, wherein,
the cam groove (25) includes:
at least one straight groove (25a) which extends in the axial direction; and
a rotary groove (25b) which is a zigzag-shaped rotary groove (25b) that extends from a leading end portion of the at least one straight groove (25a) in a circumferential direction of the operating rod (20) in order to rotate the operating rod (20).

3. The clamp device according to claim 2, wherein,
the rotary groove (25b) includes:
a leading-end-side sloped portion (25b3) which is inclined relative to the circumferential direction of the operating rod (20) and functions as a rotary guide for the at least one protrusion (26); and
a base-end-side recess (25b2) which is formed on the base end side of the leading-end-side sloped portion (25b3) and fixes the operating rod (20) as the at least one protrusion (26) is fitted in the base-end-side recess (25b2).

4. The clamp device according to claim 3, wherein,
the rotary groove (25b) includes:
a leading-end-side recess (25b1) which is formed continuously with the leading-end-side sloped portion (25b3) and allows the at least one protrusion (26) to be fitted in the leading-end-side recess (25b1); and
a base-end-side sloped portion (25b4) which is formed between the at least one straight groove (25a) and the base-end-side recess (25b2) in the circumferential direction of the operating rod (20) and functions as a rotary guide for the at least one protrusion (26).

5. The clamp device according to any one of claims 2 to 4, wherein,
plural straight grooves (25a) are provided at equal intervals in the circumferential direction of the operating rod (20).

6. The clamp device according to claim 5, wherein,
plural protrusions (26) that are equal in number to the straight grooves (25a) are provided at equal intervals in the circumferential direction of the operating rod (20).

7. The clamp device according to any one of claims 1 to 6, wherein,
the at least one protrusion (26) is a rotatable spherical body (26), and
the spherical body (26) is provided in a hole (20a, 47a) formed in the outer circumferential surface of the operating rod (20).

8. The clamp device according to any one of claims 1 to 7, further comprising
an operational member (21) which is provided at a base-end-side end portion of the operating rod (20) in order to press and move the operating rod (20) toward the leading end side, the operational member (21) being a rotatable spherical body (21).

9. The clamp device according to claim 8, wherein,
a bearing member (22) for the operational member is provided between a base-end-side end face of the operating rod (20) and the operational member (21).

10. The clamp device according to any one of claims 1 to 9, wherein,
a rotatable power transmission member (13) is provided between the clamp rod (5) and the operating rod (20).

11. The clamp device according to claim 10, wherein,
the power transmission member (13) is a spherical body (13), and
between a base-end-side end face of the clamp rod (5) and the power transmission member (13), a bearing member (14) for the power transmission member is provided.

12. The clamp device according to any one of claims 1 to 11, wherein,
the clamp rod (5) is rotatable about an axial center.

13. The clamp device according to any one of claims 1 to 12, wherein,
the operating rod (20) includes:
an operating rod main body (47) that is rotatable about an axial center and has the at least one protrusion (26) on the outer circumferential surface;
a movable member (48) that is provided in a bottomed cylindrical hole (47c) formed in a part on the leading end side of the operating rod main body (47), the movable member (48) being configured to press and move the clamp rod (5) toward the leading end side; and
a second biasing member (49) which is stretchable, is provided in the cylindrical hole (47c), and is configured to bias the movable member (48) toward the leading end side relative to the operating rod main body (47).

14. The clamp device according to claim 13, wherein,
both the biasing member (16) and the second biasing member (49) are springs, and
the spring constant of the second biasing member (49) is greater than the spring constant of the biasing member (16).

15. The clamp device according to any one of claims 1 to 14, wherein,
a cylindrical plug member (29) into which the clamp rod (5) is inserted is provided at a leading end portion of the housing (1), and
the clamp device further comprising an engaging member (35) which is inserted into a through hole (34) formed in a circumferential wall of the plug member (29), the engaging member (35) being movable in the through hole (34) due to movement of the clamp rod (5) in the axial direction and being able to make contact with an engaging portion (45) of a fitting hole (44) formed in a clamping object (WP) so that the plug member (29) becomes insertable.

## Amended claims

### Amended claims under Art. 19.1 PCT

1. A clamp device comprising:
a housing (1);
a clamp rod (5) which is provided in the housing (1) to be movable in an axial direction;
an operating rod (20) which is provided in the housing (1) to be in series with the clamp rod (5), which is rotatable about an axial center, and is configured to press and move the clamp rod (5) toward the leading end side in the axial direction;
a biasing member (16) which is provided in a leading-end-side part of the housing (1) and is configured to press and move the clamp rod (5) toward the base end side in the axial direction; and
at least one protrusion (26) which is provided on the outer circumferential surface of the operating rod (20),
a cam groove (25) in which the at least one protrusion (26) is accommodated being formed in an inner surface of the housing (1), the cam groove (25) fixing the operating rod (20) at a position where the operating rod (20) is moved to the leading end side when the operating rod (20) is pressed into the housing (1), and the cam groove (25) allowing movement of the operating rod (20) toward the base end side when the operating rod (20) is pressed into the housing (1) again, and
the cam groove (25) including:
at least one straight groove (25a) which extends in the axial direction; and
a rotary groove (25b) which is a zigzag-shaped rotary groove (25b) that extends from a leading end portion of the at least one straight groove (25a) in a circumferential direction of the operating rod (20) in order to rotate the operating rod (20).

2. The clamp device according to claim 1, wherein,
the rotary groove (25b) includes:
a leading-end-side sloped portion (25b3) which is inclined relative to the circumferential direction of the operating rod (20) and functions as a rotary guide for the at least one protrusion (26); and
a base-end-side recess (25b2) which is formed on the base end side of the leading-end-side sloped portion (25b3) and fixes the operating rod (20) as the at least one protrusion (26) is fitted in the base-end-side recess (25b2).

3. The clamp device according to claim 2, wherein,
the rotary groove (25b) includes:
a leading-end-side recess (25b1) which is formed continuously with the leading-end-side sloped portion (25b3) and allows the at least one protrusion (26) to be fitted in the leading-end-side recess (25b1); and
a base-end-side sloped portion (25b4) which is formed between the at least one straight groove (25a) and the base-end-side recess (25b2) in the circumferential direction of the operating rod (20) and functions as a rotary guide for the at least one protrusion (26).

4. The clamp device as claimed in any preceding claim wherein, plural straight grooves (25a) are provided at equal intervals in the circumferential direction of the operating rod (20).

5. The clamp device according to claim 4, wherein,
plural protrusions (26) that are equal in number to the straight grooves (25a) are provided at equal intervals in the circumferential direction of the operating rod (20).

6. The clamp device as claimed in any preceding claim, wherein, the at least one protrusion (26) is a rotatable spherical body (26), and
the spherical body (26) is provided in a hole (20a, 47a) formed in the outer circumferential surface of the operating rod (20).

7. The clamp device as claimed in any preceding claim, further comprising
an operational member (21) which is provided at a base-end-side end portion of the operating rod (20) in order to press and move the operating rod (20) toward the leading end side, the operational member (21) being a rotatable spherical body (21).

8. The clamp device according to claim 7, wherein,
a bearing member (22) for the operational member is provided between a base-end-side end face of the operating rod (20) and the operational member (21).

9. The clamp device as claimed in any preceding claim, wherein, a rotatable power transmission member (13) is provided between the clamp rod (5) and the operating rod (20).

10. The clamp device according to claim 9, wherein,
the power transmission member (13) is a spherical body (13), and
between a base-end-side end face of the clamp rod (5) and the power transmission member (13), a bearing member (14) for the power transmission member is provided.

11. The clamp device as claimed in any preceding claim, wherein, the clamp rod (5) is rotatable about an axial center.

12. The clamp device as claimed in any preceding claim, wherein, the operating rod (20) includes:
an operating rod main body (47) that is rotatable about an axial center and has the at least one protrusion (26) on the outer circumferential surface;
a movable member (48) that is provided in a bottomed cylindrical hole (47c) formed in a part on the leading end side of the operating rod main body (47), the movable member (48) being configured to press and move the clamp rod (5) toward the leading end side; and
a second biasing member (49) which is stretchable, is provided in the cylindrical hole (47c), and is configured to bias the movable member (48) toward the leading end side relative to the operating rod main body (47).

13. The clamp device according to claim 12, wherein,
both the biasing member (16) and the second biasing member (49) are springs, and
the spring constant of the second biasing member (49) is greater than the spring constant of the biasing member (16).

14. The clamp device as claimed in any preceding claim, wherein,
a cylindrical plug member (29) into which the clamp rod (5) is inserted is provided at a leading end portion of the housing (1), and
the clamp device further comprising an engaging member (35) which is inserted into a through hole (34) formed in a circumferential wall of the plug member (29), the engaging member (35) being movable in the through hole (34) due to movement of the clamp rod (5) in the axial direction and being able to make contact with an engaging portion (45) of a fitting hole (44) formed in a clamping object (WP) so that the plug member (29) becomes insertable.
